# EUROPÄISCHE PATENTSCHRIFT

(11) **EP 3 976 412 B1**
(45) Veröffentlichungstag und Bekanntmachung des Hinweises auf die Patenterteilung: **26.04.2023**
(21) Anmeldenummer: 20729027.1
(22) Anmeldetag: 25.05.2020
(51) Int. Cl.: B60K 35/00, B60K 37/04, E05C 17/02, E05D 11/10, B65D 43/24

(54) **BEDIENEINHEIT FÜR EIN FAHRZEUG**
OPERATING UNIT FOR A VEHICLE
UNITÉ DE COMMANDE POUR UN VÉHICULE

(30) Priorität: 24.05.2019 DE 102019114002
(43) Veröffentlichungstag der Anmeldung: 06.04.2022
(73) Patentinhaber: Behr-Hella Thermocontrol GmbH, 59557 Lippstadt (DE)
(72) Erfinder: HAGEN, Andreas, 59557 Lippstadt (DE); TREUGUTH, Udo, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2020/064442
(87) Internationale Veröffentlichungsnummer: WO 2020/239695

(56) Entgegenhaltungen:
- DE-A1-102004 040 038
- US-A- 5 873 749
- US-A1- 2013 112 701
- US-A1- 2014 347 796
- US-B1- 6 282 751

## Beschreibung

Die Erfindung betrifft eine Bedieneinheit für ein Fahrzeug und insbesondere ein Mensch-Maschine-Interface für ein Fahrzeug bzw. für eine Fahrzeugkomponente wie beispielsweise eine Heizungs-, Lüftungs- und/oder Klimaanlage, ein Infotainmentsystem, ein Navigationsgerät o.dgl.

Bedieneinheiten für Fahrzeuge wie beispielsweise Klimasteuergeräte für Fahrzeuge, werden aus einer Vielzahl von Einzelteilen teils automatisch zusammengesetzt. Ein wesentlicher Bestandteil derartiger Bedieneinheiten ist in zunehmenden Maßen ein Display, das entweder als Anzeigevorrichtung oder aber auch zusätzlich für die Eingabe von Befehlen ausgelegt ist. Im letztgenannten Fall ist das Display als Touchscreen ausgebildet. Neben einem Touchscreen kann dann eine Bedieneinheit auch noch andere manuell betätigbare Bedienelemente wie beispielsweise einen Drehsteller, einen Dreh-/Drücksteller oder Bedientasten in unterschiedlichsten Formen aufweisen.

Weitere Konstruktionen für die Montage von Kfz-Komponenten in Fahrzeugen mit der Möglichkeit, diese in der Endphase der Montage durch ein Verschwenken in die Endmontageposition zu überführen, sind aus US-A-2014/347796, US-A-5 873 749, DE-A-10 2004 040 038 und US-B-6 282 751 bekannt.

Verschiedene Montageverfahren zum Einbau von Displays in Fahrzeug-Halterungen sind in DE-A-10 2012 219 286, DE-A-10 2015 111 269 und DE-A-10 2017 109 022 beschrieben.

Aufgabe der Erfindung ist es, den Zusammenbau einer Bedieneinheit insbesondere im Hinblick auf die Befestigung eines Displays der Bedieneinheit zu vereinfachen.

Zur Lösung dieser Aufgabe wird mit der Erfindung eine Bedieneinheit für ein Fahrzeug, insbesondere ein Mensch-Maschine-Interface für z.B. eine Fahrzeugkomponente wie beispielsweise einer Heizungs-, Lüftungs- und/oder Klimaanlage, ein Infotainmentsystem, ein Navigationsgerät o.dgl. vorgeschlagen, wobei die Bedieneinheit versehen ist mit
- einem Gehäuse mit einer Frontblende, die eine Aussparung aufweist,
- einem in dem Gehäuse untergebrachten Display mit einer Anzeigefläche, die in der oder hinter der Aussparung angeordnet ist, und
- einer Befestigungsvorrichtung zur Befestigung des Displays in dem Gehäuse,
- wobei die Befestigungsvorrichtung ein Halteteil umfasst, von dem das Display gehalten ist,
- wobei das Halteteil zwischen einer Vormontageposition und einer Einbauposition, in der sich das Display in der oder hinter der Aussparung der Frontblende befindet, schwenkbar in dem Gehäuse angeordnet ist,
- wobei das Gehäuse - oder alternativ das Halteteil - eine Lagerachse aufweist, die von mindestens einem in dem Gehäuse - oder alternativ in dem Halteteil - angeordneten Stab gebildet ist,
- wobei das Halteteil - oder alternativ das Gehäuse - zum Aufsetzen auf den Stab mindestens eine Lagerschalenanordnung mit mindestens zwei Umgreifvorsprüngen aufweist, die zur Anlage an dem mindestens einen Stab eine kreiszylindrische Lagerschalenfläche bilden, welche sich über mehr als 180° und weniger als 270° erstreckt und zwischen sich eine Aufsetzöffnung zum Aufsetzen der Lagerschalenanordnung auf den Stab bilden,
- wobei der Stab entlang seiner Längserstreckung in zumindest einem Aufsetzabschnitt eine Umfangsfläche mit einer Außenkontur aufweist, die von der zur Lagerschalenfläche der Umgreifvorsprünge der mindestens einen Lagerschalenanordnung komplementären Form abweicht,
- wobei der Stab in dem Gehäuse - oder alternativ die mindestens Lagerschalenanordnung an dem Halteteil - derart orientiert angeordnet ist, dass die mindestens eine Lagerschalenanordnung in der Vormontageposition des Halteteils auf dem Aufsetzabschnitt des Stabes aufsetzbar und ausgehend von der Vormontageposition in die Einbauposition schwenkbar ist, in der die mindestens einen Lagerschalenanordnung den Stab innerhalb von dessen Aufsetzabschnitt unverlierbar umgreift,
- wobei die Einbauposition des Halteteils durch aneinander anliegende Anlageelemente von Gehäuse und Halteteil definiert ist und
- wobei die Befestigungsvorrichtung zumindest ein Befestigungselement zur Fixierung des Halteteils in dessen Einbauposition in und/oder an dem Gehäuse aufweist.

Sinngemäß wird mit der Erfindung vorgeschlagen, ein das Display der Bedieneinheit haltendes oder aufnehmendes Halteteil der Befestigungsvorrichtung als auf eine Lagerachse aufsteckbar auszubilden, um das Halteteil dann aus einer Vormontageposition, in der es auf der Lagerachse aufsteckt ist, in eine Einbauposition zu verschwenken, in der sich das Display dann in der gewünschten Position beispielsweise hinter einer Aussparung der Frontblende des Gehäuses der Bedieneinheit befindet.

Im Einzelnen weist die erfindungsgemäße Bedieneinheit ein Gehäuse mit einer Frontblende auf, in der eine Aussparung für das Display vorgesehen ist. Das Display weist eine Anzeigefläche auf, die im Einbauzustand des Displays in der oder hinter der Aussparung der Frontblende angeordnet ist. Zur Befestigung des Displays in dem Gehäuse dient eine Befestigungsvorrichtung. Diese weist ein Halteteil für das Display und eine an oder in dem Gehäuse - oder alternativ an dem Halteteil - angeordnete Lagerachse auf. Diese Lagerachse wird von mindestens einem fest im Gehäuse bzw. am Halteteil angeordneten stabähnlichen Teil, bei dem es sich vorzugsweise um ein rundstabähnliches Teil handelt, gebildet. Nachfolgend wird das stabähnliche Teil mit Stab bezeichnet.

Wie bereits oben erwähnt, lässt sich das Halteteil ausgehend von seiner Montageposition in die Einbauposition verschwenken. Zur Befestigungsvorrichtung gehört neben dem Halteteil und der Lagerachse bzw. dem mindestens einen stabähnlichen Element (nachfolgend der Einfachheit halber mit "Stab" bzw. "Stäbe" bezeichnet) ferner noch eine Lagerschalenanordnung, die mit der Lagerachse zusammenwirkt und ein trennbares Scharnier bildet. Hierzu weist der mindestens eine Stab längs seine Erstreckung einen Aufsetzabschnitt auf, auf dem sich die Lagerschalenanordnung bei in der Vormontageposition befindendem Halteteil auf dem Stab aufsteckbar ist. Die Lagerschalenanordnung weist mindestens zwei Umgreifvorsprünge zum Umgreifen des Stabes auf, wobei die mindestens zwei Umgreifvorsprünge eine kreiszylindrische Lagerschalenfläche zur Anlage an dem Stab bilden. Zwischen den beiden Umgreifvorsprüngen befindet sich eine Aufsetzöffnung, so dass die beiden Umgreifvorsprünge eine sich vorzugsweise über mehr als 180° und weniger als 270° in Umfangsrichtung erstreckende kreiszylindrische Lagerschalenfläche bilden. Die Umgreifvorsprünge brauchen diese Lagerschalenfläche nicht durchgehend zu bilden; abschnittsweise aber weisen die Umgreifvorsprünge Flächenbereiche auf, die längs der Kontur der kreiszylindrischen Lagerschalenfläche verlaufen und diese in Teilen bilden oder begrenzen.

Mit anderen Worten weist die Lagerschalenanordnung, also eine in Seitenansicht betrachtet C-förmige Ausgestaltung auf. Durch die Aufsetzöffnung dieser C-förmigen Anordnung lässt sich nun die Lagerschalenanordnung auf den Aufsetzabschnitt des Stabes aufsetzen, um dann ausgehend von dieser Position, die gleich der Vormontageposition des Halteteils ist, relativ zum Stab bis in die Einbauposition des Halteteils verschwenkt zu werden. In der Einbauposition des Halteteils ist die Lagerschalenanordnung bzw. sind die Umgreifvorsprünge der Lagerschalenanordnung unverlierbar am Stab gesichert. Die Einbauposition selbst wird ferner durch Anlageelemente von Gehäuse und Halteteil definiert. An diesen Anlageelementen kann dann schließlich auch die Fixierung des Halteteils am Gehäuse durch beispielsweise ein Befestigungselement erfolgen.

Ein wesentlicher Vorteil der erfindungsgemäßen Bedieneinheit ist also in der einfachen Montage des Displays zu sehen. Bezogen auf ein dreidimensionales Koordinatensystem mit Erstreckung der X-Achse längs des Stabes, Erstreckung der Y-Achse orthogonal dazu sowie parallel zur Frontblende und mit Erstreckung der Z-Achse orthogonal zu beiden (und damit z.B. in das Gehäuse hinein) wird also die Positionierung des Displays in Erstreckung der Y-Achse durch den Stab und die Lagerschalenanordnung definiert, während die Positionierung in Z-Richtung durch die Anlageelemente bestimmt ist, und zwar durch den vergleichsweise einfach zu realisierenden, zuvor beschriebenen Montagevorgang (Fixierung durch Befestigung des Halteelements am Gehäuse nach vorherigem Aufstecken der Lagerschalenanordnung auf den die Lagerachse bildenden Stab durch Verschwenken des Halteelements aus dieser Vormontageposition in die Einbauposition).

Neben den zuvor genannten Bestandteilen der erfindungsgemäßen Bedieneinheit kann diese auch noch weitere andere Bedienelemente wie Tasten, Drehsteller, Drückknöpfe, Drehknöpfe, usw. aufweisen.

Innerhalb seines Aufnahmeabschnitts weist der Stab, wie bereits oben geschrieben, eine von der kreiszylindrischen Umfangsfläche abweichende Außenkontur auf. Die Außenkontur des Stabes in dem Aufsetzabschnitt erstreckt sich dabei bis zur kreiszylindrischen Umfangsfläche oder gegenüber dieser zurückspringend. Die Ausrichtung des Stabes ist dergestalt, dass bei vom Halteteil eingenommener Vormontageposition sich die Umgreifvorsprünge der mindestens einen Lagerschalenanordnung auf den Aufsteckabschnitt des Stabes aufstecken lassen. Beispielsweise weist der Stab in seinem Aufsteckabschnitt ein oder mehrerer Abflachungsabschnitte auf, wobei zweckmäßigerweise bei Ausbildung zweier Abflachungsabschnitte diese diametral einander gegenüberliegen. Alternativ ist es aber auch möglich, dass der Stab eine mehrfach polygonale Außenkontur aufweist, ohne dass die einzelnen Abschnitte der Umfangsfläche kreiszylindrisch verlaufen müssen. So könnte der Stab in seinem Aufsteckabschnitt beispielsweise viereckig oder quadratisch ausgebildet sein, wobei die Diagonale im Wesentlichen gleich dem die kreiszylindrische Lagerschalenfläche der Lagerfahnenanordnung definierenden Durchmesser ist. Mit anderen Worten ist bei dieser zuletzt genannten Variante des Stabes die längste durch die Mittelachse des Stabes verlaufende Abstandslinie zwischen zwei gegenüberliegenden Außenecken der polygonalen Umfangsfläche gleich dem oder im Wesentlichen gleich dem von der kreiszylindrischen Lagerschalenfläche der Lagerschalenanordnung definierten Durchmesser.

Jedes stabähnliche Teil kann durchgehend ausgebildet sein oder aber einzelne voneinander getrennte Abschnitte aufweisen, die miteinander in Erstreckung der Lagerachse fluchten, wobei die einzelnen Abschnitte jeweils eine der Abflachungen oder mehrere Abflachungen aufweisen.

Wie bereits oben angedeutet, sind die Umgreifvorsprünge der mindestens einen Lagerschalenanordnung, in Erstreckung der Lagerachse betrachtet als im Wesentlichen C-förmige Lagerschalenanordnung ausgebildet. Hierbei bilden die Umgreifvorsprünge an ihren freien Enden die Aufsetzöffnung, die eine Weite aufweist, die größer oder gleich der Dicke des Stabes innerhalb von dessen Aufsetzabschnitt ist, und zwar bei Betrachtung des Stabes von der Seite in Richtung des Aufsteckens des Halteteils, wenn dieses in seiner Vormontageposition auf die Lagerachse aufgesetzt wird.

In weiterer zweckmäßiger Ausgestaltung der Erfindung ist vorgesehen, dass die Umgreifvorsprünge der mindestens einen Lagerschalenanordnung einander gegenüberliegen und mindestens ein Paar derartiger Umgreifvorsprünge existiert.

Alternativ bzw. zusätzlich zu einer Lagerschalenanordnung mit zwei gegenüberliegenden Umgreifvorsprüngen kann eine Lagerschalenanordnung beispielsweise auch drei Umgreifvorsprünge aufweisen, von denen zwei erste Umgreifvorsprünge zu einer gemeinsamen Seite der Lagerachse lateral und axial versetzt zueinander angeordnet sind, während der verbleibende eine zweite Umgreifvorsprung den beiden ersten Umgreifvorsprüngen diametral gegenüberliegt, und zwar auf Lücke zwischen den beiden ersten Umgreifvorsprüngen.

In weiterer vorteilhafter Ausgestaltung der Erfindung kann die Bedieneinheit versehen sein mit einer Positionierelementanordnung zur Positionierung von Halteelement und Gehäuse relativ zueinander in Längserstreckung des Stabes bei Einnahme der Einbauposition durch das Halteteil, wobei die Positionierelementanordnung an dem Gehäuse - oder alternativ am Halteteil - zwei einander zugewandte Lagerschalenflächen aufweist, zwischen die in der Einbauposition des Halteteils ein an dem Halteteil - oder alternativ an dem Gehäuse - angeordneter Axialpositioniervorsprung eintauchbar ist. Durch die Positionierelementanordnung lässt sich nun das Halteteil auch in Längserstreckung der Lagerachse, d. h. bezogen auf das zuvor angegebene Koordinatenkreuz, in Erstreckung der X-Achse fixieren und in der Einbauposition festlegen. Damit ist das Halteteil und das vom Halteteil gehaltene Display in der Einbauposition in sämtlichen drei rechtwinklig zueinander stehenden Raumrichtungen definiert positioniert.

Zweckmäßigerweise kann ferner bei der erfindungsgemäßen Vorrichtung vorgesehen sein, dass die Lagerachse durch zwei miteinander fluchtende Stäbe gebildet ist, wobei jedem Stab Umgreifvorsprünge einer Lagerschalenanordnung zugeordnet sind, und/oder dass die Einbauposition des Halteteils durch zwei Paare von miteinander zusammenwirkenden Anlageelementen an Halteteil und Gehäuse definiert ist.

Die Bedieneinheit kann ferner zur Unterstützung der Ausrichtung des Halteteils relativ zum Gehäuse beim zur Einnahme der Vormontageposition des Halteteils erfolgenden Aufstecken der Umgreifvorsprünge der Lagerschalenordnung auf dem mindestens einen Stab miteinander zusammenwirkende Führungsflächen aufweisen.

Die Erfindung wird nachfolgend anhand mehrerer Ausführungsbeispiele und unter Bezugnahme auf die Zeichnung im Detail beschrieben. Im Einzelnen zeigen dabei:
- Fig. 1: eine perspektivische Ansicht auf die Vorderseite einer Bedieneinheit gemäß einem Ausführungsbeispiel der Erfindung,
- Fig. 2: eine Explosionsansicht zur Verdeutlichung der hauptsächlich für die Erfindung relevanten Komponenten der Bedieneinheit,
- Fign. 3 bis 10: die verschiedenen Zustände und Relativanordnungen von Display haltendem Halteteil und Gehäuse vor der sowie in der Montageposition und nach dem Verschwenken in die Einbauposition,
- Fign. 11 und 12: nochmalige schematische Darstellungen des in der Vormontageposition des Halteteils zusammensteckbaren und in der Einbauposition untrennbaren Gelenkscharniers zwischen Halteteil und Gehäuse bei der Bedieneinheit gemäß den Fign. 2 bis 10 und
- Fign. 13 bis 16: zwei weitere Ausführungsbeispiele für das in der Vormontageposition zusammensteckbare und in der Einbauposition untrennbare Gelenkscharnier zwischen Halteteil und Gehäuse.

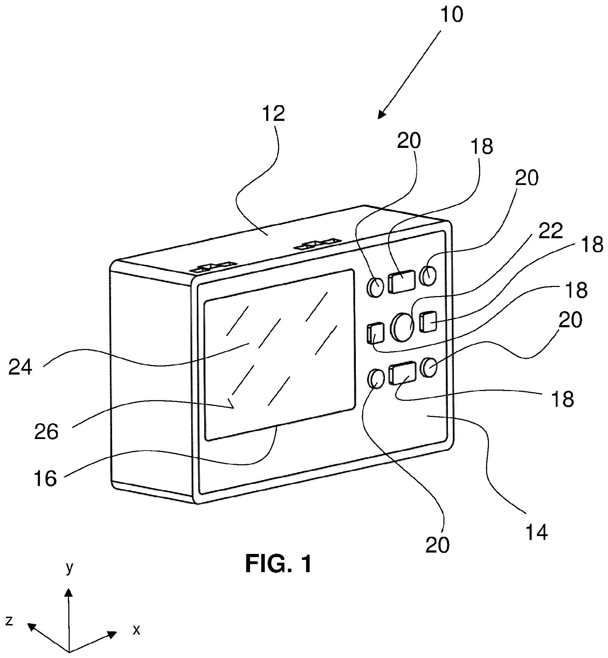

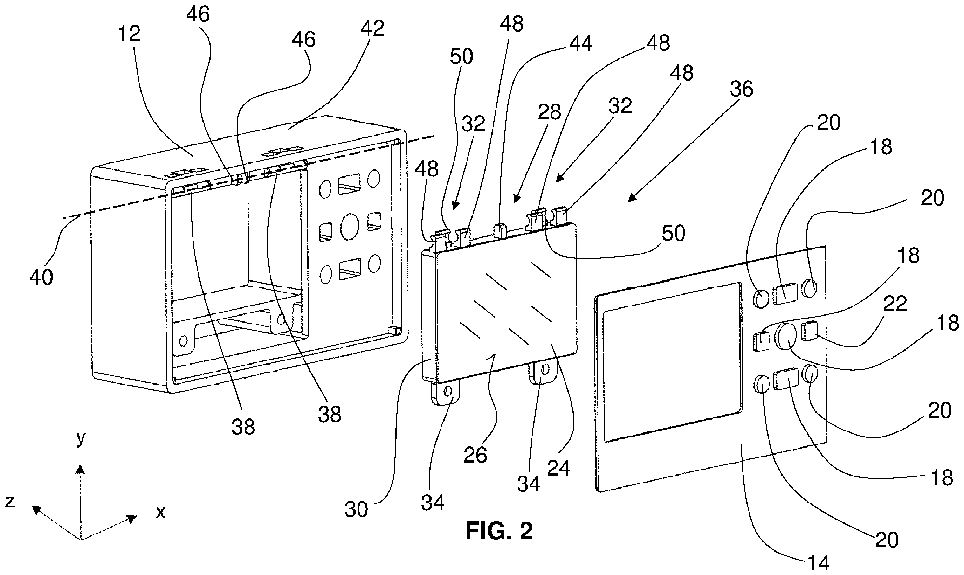

In den Fign. 1 und 2 sind in perspektivischer Vorderansicht sowie in Explosionsansicht die wesentlichen Komponenten einer Bedieneinheit 10 gemäß einem Ausführungsbeispiel der Erfindung gezeigt. Die Bedieneinheit 10 weist ein Gehäuse 12 auf, an dessen Vorderseite sich eine Frontblende 14 befindet, die eine Aussparung 16 aufweist. An der Frontblende 14 befinden sich verschiedene manuell betätigbare Bedienelemente wie Bedientasten 18, Knöpfe 20 und beispielweise ein Dreh-/Drücksteller 22. Auf diese Art von Bedienelementen wird aber im Folgenden nicht weiter eingegangen, da Wesensmerkmal der Erfindung die Montage eines Displays 24 ist, dessen Anzeigefläche 26 in der Einbauposition hinter der Frontblende 14 positioniert ist.

Fig. 2 zeigt, dass das Display 24 von einem Halteteil 28 gehalten ist, das seinerseits eine Halteschale oder einen Halterahmen 30 mit zwei Lagerschalenanordnungen 32 und zwei Fixierlaschen als Anlageelemente 34 aufweist. Die Lagerschalenanordnungen 32 und die Anlageelemente 34 gehören wie das Halteteil 28 zu einer Befestigungsvorrichtung 36, die zusätzlich auch noch zwei im Gehäuse 12 ortsfest angeordnete stabähnliche Teile 38 (nachfolgend der Einfachheit halber mit "Stab" bzw. "Stäbe" bezeichnet) aufweist, die in Längserstreckung miteinander fluchtend angeordnet sind und eine Lagerachse 40 definieren, welche wiederum mit den Lagerschalenanordnungen 32 zusammenwirkt, was weiter unten noch erläutert wird. Das bzw. die stabförmigen Teile 38 und die Lagerschalenanordnung 32 können auch invers zum vorher Gesagten auf Gehäuse 12 und Halteteil 28 aufgeteilt angeordnet sein. Die Bedieneinheit 10 weist ferner eine Positionierelementanordnung 42 auf, zu der ein Axial-Positioniervorsprung 44 am Halteteil 28 und zwei Positionieranlageelemente 46 am Gehäuse 12 (oder umgekehrt) gehören, auf deren Funktion weiter unten noch eingegangen werden wird.

Jedes stabähnliche Teil 38 kann durchgehend ausgebildet sein oder aber einzelne voneinander getrennte Abschnitte aufweisen, die miteinander in Erstreckung der Lagerachse 40 fluchten, wobei die einzelnen Abschnitte jeweils eine der Abflachungen 54, 56 oder mehrere Abflachungen 54, 56 aufweisen.

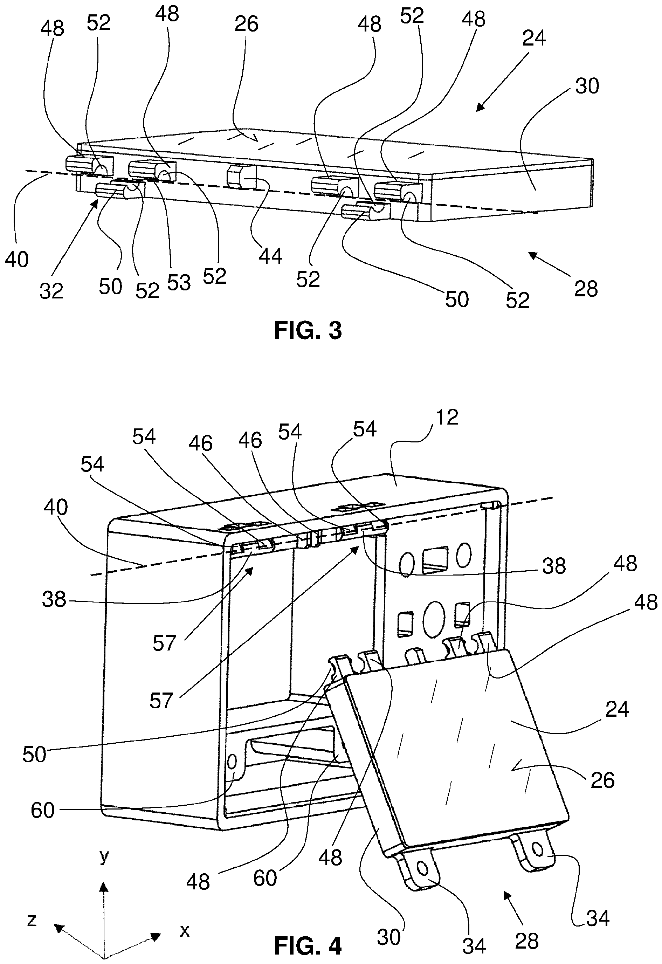

Wie beispielsweise anhand von Fig. 3 zu erkennen ist, weisen die beiden Lagerschalenanordnungen 32 jeweils eine Gruppe von vom Halteteil 28 abstehenden Umgreifvorsprüngen auf, wobei zwei erste Umgreifvorsprünge 48 mit Abstand nebeneinander angeordnet sind und ein zweiter Umgreifvorsprung 50 auf Lücke dieser beiden ersten Umgreifvorsprünge 48 und diesen gegenüberliegend und damit, bezogen auf die Lagerachse 40 diametral gegenüberliegend positioniert ist. Jeder Umgreifvorsprung 48 weist einen kreiszylindrischen Abschnitt einer Lagerschalenfläche 52 auf, wobei sich bei Betrachtung der Lagerschalenanordnung 32 in Richtung des Pfeils der Fig. 3 zeigt, dass die Umgreifvorsprünge 48, 50 jeder Lagerschalenanordnung 32 eine C-förmige Konstruktion ergeben, die sich über mehr als 180° und insbesondere weniger als 270° erstreckt und eine Aufsetzöffnung 53 bildet.

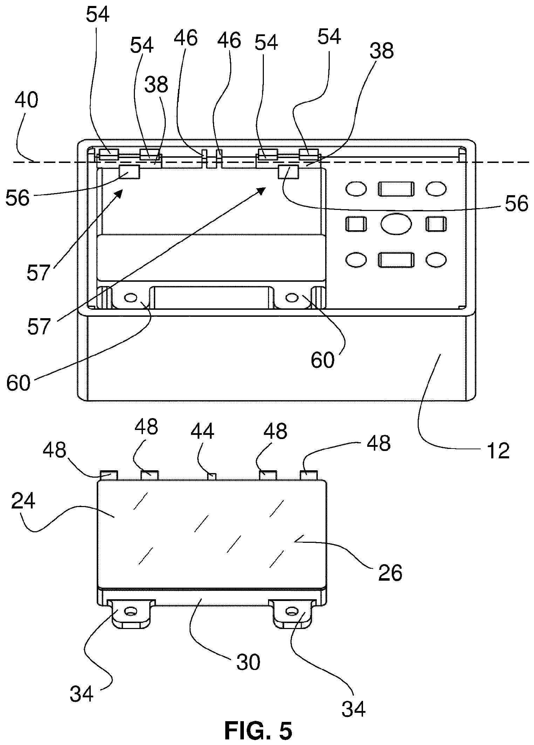

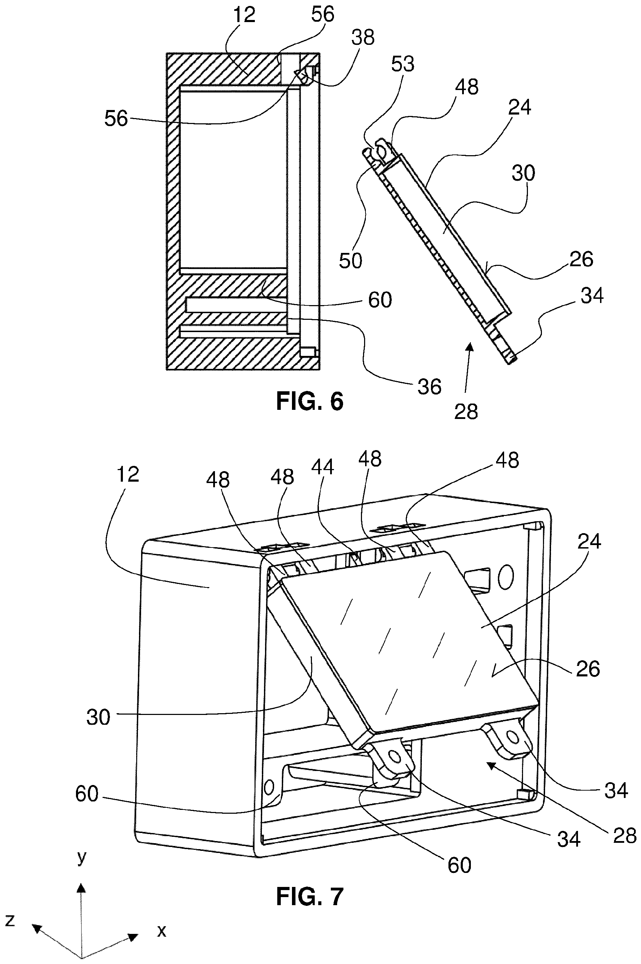

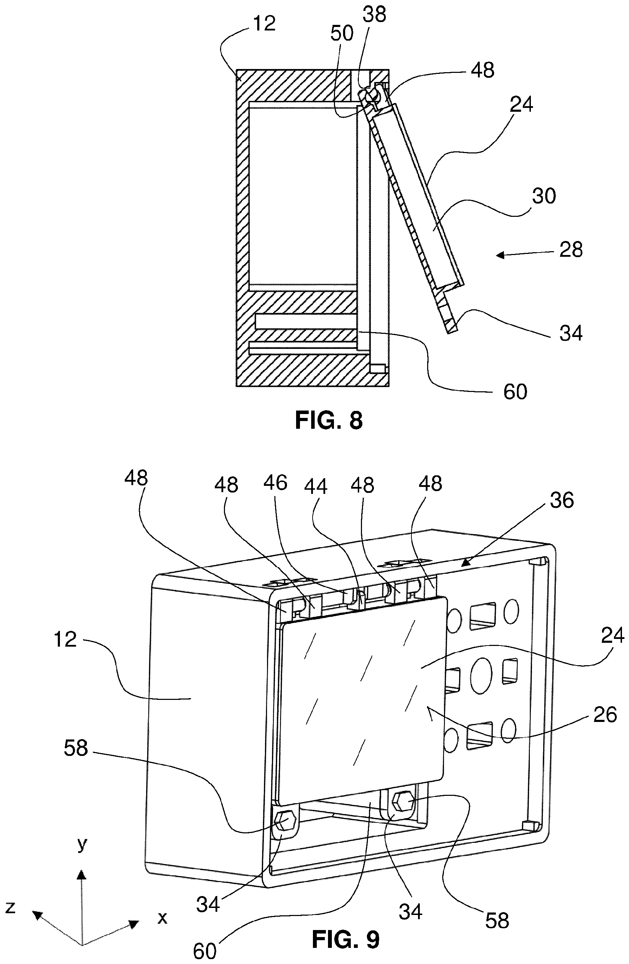

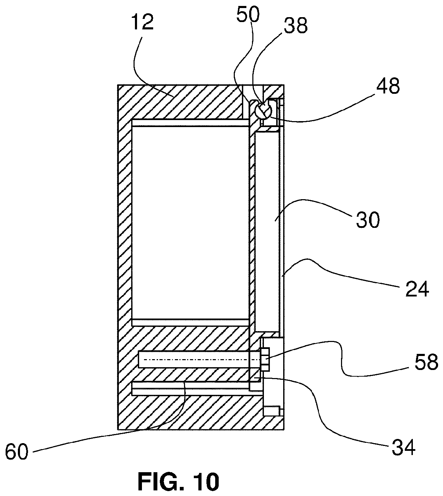

In den Figuren ist angedeutet, dass die beiden Stäbe 38 zu den Positionen der drei Umgreifvorsprünge 48, 50 jeder Lagerschalenanordnung 32 korrespondierende Abflachungen 54, 56 aufweisen, die in ihrer Gesamtheit Aufsetzabschnitte 57 der Stäbe 38 bilden. Damit lässt sich jede Lagerschalenanordnung seitlich auf einen der Stäbe 38 aufsetzen, wie es in den Fign. 3 bis 8 gezeigt ist. In den Fign. 3 bis 6 sind verschiedene Ansichten gezeigt, in denen das Halteteil 28 in seiner Vormontageposition auf die Lagerachse 40 aufgesetzt wird. Dazu wird das Halteteil 28 schrägliegend und in zur Vorderseite des Gehäuses 12 schrägliegender Ausrichtung seitlich auf die beiden Stäbe 38 aufgesetzt, wobei die Umgreifvorsprünge 48, 50 jeder Lagerschalenanordnung 32 den ihnen zugeordneten Stab 38 beidseitig umgreifen. Nach dem Aufsetzen auf die Stäbe 38 ergibt sich die Situation gemäß Fign. 7 und 8. Anschließend wird das Halteteil ausgehend von dieser Vormontageposition in die Einbauposition geschwenkt, wie es in den Fign. 7 und 8 durch die Pfeile angedeutet ist. In der Einbauposition nimmt das Halteteil 28 den Zustand gemäß den Fign. 9 und 10 ein.

Wie insbesondere anhand der Fign. 9 und 10 zu erkennen ist, ist nun das Halteteil 28 in Y- und Z-Erstreckung des in Fig. 9 eingezeichneten Koordinatensystems positioniert. Die Fixierung des Halteteils 28 am Gehäuse 12 erfolgt dabei mittels Befestigungselementen 58 (angedeutet in Fig. 10), die die Anlageelemente 34 des Halteteils 28 an Anlageelementen 60 im/am Gehäuse 12 festlegen. Der Axialpositioniervorsprung 44 der Positionierelementanordnung 42 ist dabei zwischen den beiden Positionieranlageelementen 46 eingetaucht, was in Fig. 9 zu erkennen ist.

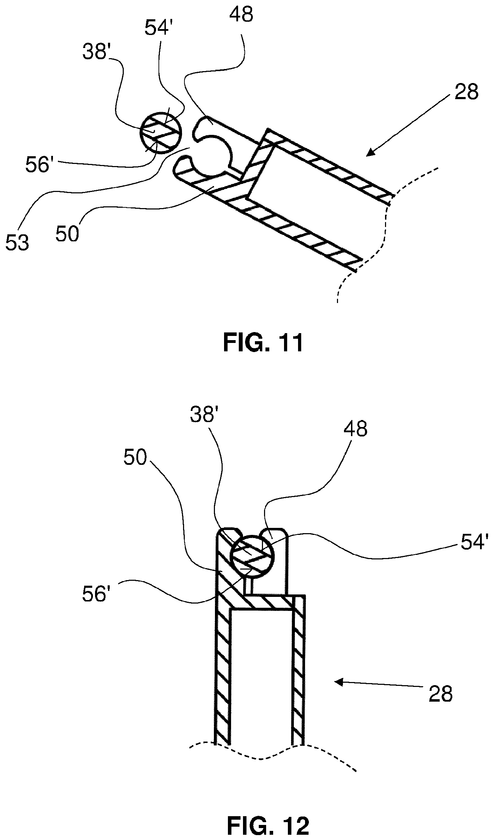

In den Fign. 11 und 12 ist das Prinzip des zusammensteckbaren Gelenks, wie es erfindungsgemäß für die Montage des Halteteils 28 an dem Gehäuse 12 eingesetzt wird, nochmals schematisch erläutert. Der Stab 38' weist einander gegenüberliegende erste und zweite Abflachungen 54', 56' auf, von denen zwei erste Abflachungen 54' auf einer Seite paarweise nebeneinanderliegen, wobei die zweite Abflachung 56' zwischen diesen erstgenannten Abflachungen 54' sozusagen auf Lücke" und auf der gegenüberliegenden Seite angeordnet ist. Die entsprechenden Umgreifvorsprünge 48, 50 lassen sich in der Vormontageposition des Halteteils 28 über diese Abflachungen 54', 56' schieben, dienen danach als Schwenklager zum Verschwenken des Halteteils 28 in die Einbauposition und umgreifen den Stab 38', wenn sich das Halteteil 28 in seiner Einbauposition befindet (s. Fig. 12).

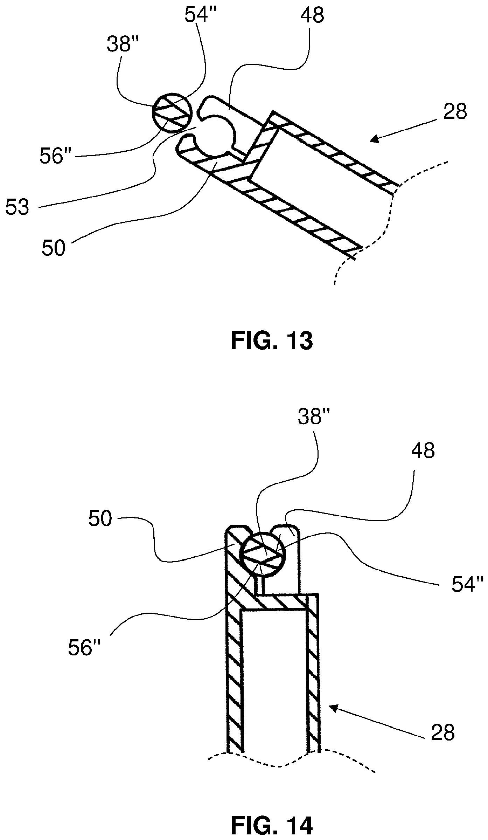

Die beiden zuvor genannten Situationen (Vormontageposition und Einbauposition) sind in den Fign. 13 und 14 bzw. 15 und 16 für zwei andere Ausgestaltungen des Stabes gezeigt.

In den Fign. 13 und 14 weist der Stab 38' ebenfalls Abflachungen 54", 56" auf, die allerdings anders als im Ausführungsbeispiel nach den Fign. 11 und 12 nicht parallel, sondern winklig zueinander verlaufen.

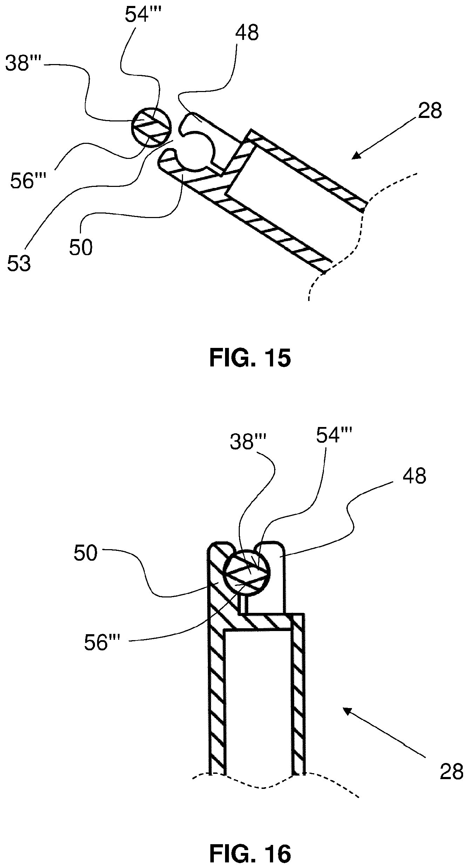

In den Fign. 15 und 16 ist ein Ausführungsbeispiel eines Stabes 38"' gezeigt, bei dem dieser ein quadratisches Profil aufweist. Die Abflachungen 54‴ und 56'" sind hier wiederum parallel zueinander und diametral gegenüberliegend und damit ähnlich wie im Ausführungsbeispiel der Fign. 11 und 12. Die Diagonale des quadratischen Querschnitts ist dabei gleich dem Durchmesser der kreiszylindrischen Lagerschalenfläche 52.

### BEZUGSZEICHENLISTE

- 10: Bedieneinheit
- 12: Gehäuse
- 14: Frontblende
- 16: Aussparung
- 18: Bedientaste
- 20: Bedienknopf
- 22: Dreh-/Drücksteller
- 24: Display
- 26: Anzeigefläche
- 28: Halteteil
- 30: Halterahmen
- 32: Lagerschalenanordnung
- 34: Anlageelement an dem Halteteil
- 36: Befestigungsvorrichtung
- 38: Stab
- 38': Stab
- 38": Stab
- 38‴: Stab
- 40: Lagerachse
- 42: Positionierelementanordnung
- 44: Axialpositioniervorsprung
- 46: Positionieranlageelement
- 48: Umgreifvorsprung
- 50: Umgreifvorsprung
- 52: Lagerschalenfläche
- 53: Aufsetzöffnung
- 54: Abflachung
- 54': Abflachung
- 54": Abflachung
- 54'": Abflachung
- 56: Abflachung
- 56': Abflachung
- 56": Abflachung
- 56‴: Abflachung
- 57: Aufsetzabschnitt
- 58: Befestigungselement
- 60: Anlageelement an dem Gehäuse

## Patentansprüche

1. Bedieneinheit für ein Fahrzeug, insbesondere Mensch-Maschine-Interface für z.B. eine Fahrzeugkomponente wie beispielsweise eine Heizungs-, Lüftungs- und/oder Klimaanlage, ein Infotainmentsystem, ein Navigationsgerät o.dgl., mit
- einem Gehäuse (12) mit einer Frontblende (14), die eine Aussparung (16) aufweist,
- einem in dem Gehäuse (12) angeordneten Display (24) mit einer Anzeigefläche (26), die in der oder hinter der Aussparung (16) angeordnet ist, und
- einer Befestigungsvorrichtung (36) zur Befestigung des Displays (24) in dem Gehäuse (12),
- wobei die Befestigungsvorrichtung (36) ein Halteteil (28) aufweist, von dem das Display (24) gehalten ist,
- wobei das Halteteil (28) zwischen einer Vormontageposition und einer Einbauposition, in der sich das Display (24) in der oder hinter der Aussparung (16) der Frontblende (14) befindet, schwenkbar in dem Gehäuse (12) angeordnet ist,
- wobei das Gehäuse (12) - oder alternativ das Halteteil (28) - eine Lagerachse (40) aufweist, die von mindestens einem in dem Gehäuse (12) - oder alternativ in dem Halteteil (28) - angeordneten stabförmigen Teil (38, 38', 38") gebildet ist,
- wobei das Halteteil (28) - oder alternativ das Gehäuse (12) - zum Aufsetzen auf das stabförmige Teil (38, 38', 38") mindestens eine Lagerschalenanordnung (32) mit mindestens zwei Umgreifvorsprüngen (48, 50) aufweist, die zur Anlage an dem mindestens einen stabförmigen Teil (38, 38', 38") eine kreiszylindrische Lagerschalenfläche (52) bilden, welche sich über mehr als 180° und weniger als 270° erstreckt und zwischen sich eine Aufsetzöffnung (53) zum Aufsetzen der Lagerschalenanordnung (32) auf das stabförmige Teil (38, 38', 38") bilden,
- wobei die Einbauposition des Halteteils (28) durch aneinander anliegende Anlageelemente (34, 60) von Gehäuse (12) und Halteteil (28) definiert ist und
- wobei die Befestigungsvorrichtung (36) zumindest ein Befestigungselement (58) zur Fixierung des Halteteils (28) in dessen Einbauposition in und/oder an dem Gehäuse (12) aufweist,
**dadurch gekennzeichnet,**
- **dass** das stabförmige Teil (38, 38', 38") entlang seiner Längserstreckung in zumindest einem Aufsetzabschnitt (57) eine Umfangsfläche mit einer Außenkontur aufweist, die von der zur Lagerschalenfläche (52) der Umgreifvorsprünge (48, 50) der mindestens einen Lagerschalenanordnung (32) komplementären Form abweicht, und
- **dass** das stabförmige Teil (38, 38', 38") in dem Gehäuse (12) - oder alternativ die mindestens Lagerschalenanordnung (32) an dem Halteteil (28) - derart orientiert angeordnet ist, dass die mindestens eine Lagerschalenanordnung (32) in der Vormontageposition des Halteteils (28) auf dem Aufsetzabschnitt (57) des stabförmigen Teils (38, 38', 38") aufsetzbar und ausgehend von der Vormontageposition in die Einbauposition schwenkbar ist, in der die mindestens einen Lagerschalenanordnung (32) das stabförmige Teil (38, 38', 38") innerhalb von dessen Aufsetzabschnitt (57) unverlierbar umgreift,

2. Bedieneinheit nach Anspruch 1, **dadurch gekennzeichnet, dass** das mindestens eine stabförmige Teil (38, 38', 38") innerhalb seines Aufsetzabschnitts (57) eine durch mindestens einen Abflachungsabschnitt (54, 54', 54", 56, 56', 56") von der kreiszylindrischen Umfangsform abweichende Außenkontur aufweist.

3. Bedieneinheit nach Anspruch 2, **dadurch gekennzeichnet, dass** das mindestens eine stabförmige Teil (38, 38', 38") innerhalb seines Aufsetzabschnitts (57) eine durch mindestens zwei Abflachungsabschnitte (54, 54', 54", 56, 56', 56") von der kreiszylindrischen Umfangsform abweichende Außenkontur aufweist.

4. Bedieneinheit nach Anspruch 3, **dadurch gekennzeichnet, dass** zwei Abflachungsabschnitte (54, 54', 54", 56, 56', 56") diametral gegenüberliegend angeordnet sind.

5. Bedieneinheit nach Anspruch 1, **dadurch gekennzeichnet, dass** das mindestens eine stabförmige Teil (38, 38', 38") in seinem Aufsteckabschnitt (57) eine polygonale Umfangsfläche aufweist, wobei die längste durch die Mittelachse des stabförmigen Teils (38, 38', 38") verlaufende Abstandslinie zwischen zwei gegenüberliegenden Außenecken der polygonalen Umfangsfläche gleich dem oder im Wesentlichen gleich dem von der kreiszylindrischen Lagerschalenfläche (52) der Umgreifvorsprünge (48, 50) der mindestens einen Lagerschalenanordnung (32) definierten Durchmesser ist.

6. Bedieneinheit nach einem der Ansprüche 1 bis 5, **dadurch gekennzeichnet, dass** die Umgreifvorsprünge (48, 50) der mindestens einen Lagerschalenanordnung (32), in Erstreckung der Lagerachse (40) betrachtet, eine im Wesentlichen C-förmige Anordnung bilden.

7. Bedieneinheit nach einem der Ansprüche 1 bis 6, **dadurch gekennzeichnet, dass** die Umgreifvorsprünge (48, 50) der mindestens einen Lagerschalenanordnung (32) einander gegenüberliegen und mindestens ein Paar derartiger Umgreifvorsprünge (48, 50) existiert.

8. Bedieneinheit nach einem der Ansprüche 1 bis 6, **dadurch gekennzeichnet, dass** die Umgreifvorsprünge (48, 50), in Erstreckung der Lagerachse (40) betrachtet, axial versetzt zueinander angeordnet sind, wobei innerhalb des Abstandsbereichs zwischen benachbarten ersten Umgreifvorsprüngen (48) mindestens ein diesen gegenüberliegender zweiter Umgreifvorsprung (50) angeordnet ist.

9. Bedieneinheit nach einem der Ansprüche 1 bis 8, **gekennzeichnet durch** eine Positionierelementanordnung (42) zur Positionierung von Halteelement (28) und Gehäuse (12) relativ zueinander in Längserstreckung des stabförmigen Teils (38, 38', 38") bei Einnahme der Einbauposition **durch** das Halteteil (28), wobei die Positionierelementanordnung (42) an dem Gehäuse (12) - oder alternativ am Halteteil (28) - zwei benachbarte Positionieranlageelemente (46) aufweist, zwischen die in der Einbauposition des Halteteils (28) ein an dem Halteteil (28) - oder alternativ an dem Gehäuse (12) - angeordneter Axialpositioniervorsprung (44) eintauchbar ist.

10. Bedieneinheit nach einem der Ansprüche 1 bis 9, **dadurch gekennzeichnet, dass** die Lagerachse (40) durch zwei miteinander fluchtende Stäbe gebildet ist, wobei jedem stabförmigen Teil (38, 38', 38") Umgreifvorsprünge (48, 50) einer Lagerschalenanordnung (32) zugeordnet sind, und/oder dass die Einbauposition des Halteteils (28) durch zwei Paare von miteinander zusammenwirkenden Anlageelementen (34, 60) an Halteteil (28) und Gehäuse (12) definiert ist.

11. Bedieneinheit nach Anspruch 9 und 10, **dadurch gekennzeichnet, dass** die Positionierelementanordnung (42) zwischen den beiden Stäben oder zwischen den beiden Paaren von Anlageelementen (34, 60) angeordnet ist.

12. Bedieneinheit nach einem der Ansprüche 1 bis 11, **gekennzeichnet durch** miteinander zusammenwirkende Führungsflächen an dem Halteteil (28) und an dem Gehäuse (12) zur Unterstützung der Ausrichtung des Halteteils (28) beim zur Einnahme der Vormontageposition des Halteteils (28) erfolgenden Aufstecken der Umgreifvorsprünge (48, 50) der mindestens einen Lagerschalenanordnung (32) auf das mindestens eine stabförmige Teil (38, 38', 38").

## Claims

1. An operating unit for a vehicle, in particular a man-machine interface for e.g. a vehicle component, such as a heating, ventilating and/or air conditioning system, an infotainment system, a navigation device and the like, for example, comprising
- a housing (12) having a front panel (14) comprising a recess (16),
- a display (14) accommodated in the housing (12) and having a display area (26) which is arranged in the or behind the recess (16), and
- a fastening device (36) for fastening the display (24) in the housing (12),
- wherein the fastening device (36) comprises a holding part (28) holding the display (24),
- wherein the holding part (28) is arranged in the housing (12) so as to be pivotable between a preassembly position and an installation position in which the display (24) is located in the or behind the recess (16) of the front panel (14),
- wherein the housing (12) - or alternatively the holding part (28) - comprises a bearing axle (40) which is constituted by a least one bar-shaped part (38, 38', 38") arranged in the housing (12) - or alternatively in the holding part (28),
- wherein the holding part (28) - or alternatively the housing (12) - comprises at least one bearing shell assembly (32) having at least two gripping-around protrusions (48, 50) adapted to be mounted on the bar-shaped part (38, 38', 38"), which gripping-around protrusions define a circular-cylindrical bearing shell area (52) for abutting on the at least one bar-shaped (38, 38', 38"), said bearing shell area extending over more than 180° and less than 270° and defining a mounting opening (53) for mounting the bearing shell assembly (32) on the bar-shaped part (38, 38', 38"),
- wherein the installation position of the holding part (28) is defined by abutting elements (34, 60) of the housing (12) and the holding part (28), with the abutting elements abutting on each other, and
- wherein the fastening device (38) comprises at least one fastening element (58) for fixing the holding part (28), in its installation position, in and/or at the housing (12)
**characterized in that**
- the bar-shaped part (38, 38', 38") comprises, along its longitudinal extension, in at least one mounting portion (57) a circumferential area having an outer contour which deviates from the shape complementary to the bearing shell area (52) of the gripping-around protrusions (48, 50) of the at least one bearing shell assembly (32),
- the bar-shaped part (38, 38', 38") is arranged in the housing (12) - or alternatively the at least one bearing shell assembly (32) at the holding part (28) - so as to be oriented in such a way that the at least one bearing shell assembly (32), in the preassembly position of the holding part (28), is adapted to be mounted on the mounting portion (57) of the bar-shaped part (38, 38', 38") and is pivotable from the preassembly position into the installation position in which the at least one bearing shell assembly (32) grips around the bar-shaped part (38, 38', 38") within its mounting portion (57) so as to be undetachable,

2. The operating unit according to claim 1, **characterized in that** the at least one bar-shaped part (38, 38', 38") comprises, within its mounting portion (57), an outer contour deviating from the circular-cylindrical circumferential shape due to at least one flattened portion (54, 54', 54", 56, 56', 56").

3. The operating unit according to claim 2, **characterized in that** the at least one bar-shaped part (38, 38', 38") comprises, within its mounting portion (57), an outer contour deviating from the circular-cylindrical circumferential shape due to at least two flattened portions (54, 54', 54", 56, 56', 56").

4. The operating unit according to claim 3, **characterized in that** two flattened portions (54, 54', 54", 56, 56', 56") are arranged diametrically opposite to each other.

5. The operating unit according to claim 1, **characterized in that** the at least one bar-shaped part (38, 38', 38") has a polygonal circumferential area in its mounting portion (57), wherein the longest distance line, extending through the center axis of the bar-shaped part (38, 38', 38"), between two opposite outer corners of the polygonal circumferential area is equal to or essentially equal to the diameter defined by the circular-cylindrical bearing shell area (52) of the gripping-around protrusions (48, 50) of the at least one bearing shell assembly (32).

6. The operating unit according to any one of claims 1 to 5, **characterized in that** the gripping-around protrusions (48, 50) of the at least one bearing shell assembly (32) essentially define a C-shape as seen in the extension of the bearing axle (40).

7. The operating unit according to any one of claims 1 to 6, **characterized in that** the gripping-around protrusions (48, 50) of the at least one bearing shell assembly (32) are opposite to each other and at least one pair of such gripping-around protrusions (48, 50) exists.

8. The operating unit according to any one of claims 1 to 6, wherein the gripping-around protrusions (48, 50) are arranged axially offset from each other, as seen in the extension of the bearing axle (40), wherein within the distance area between two neighboring first gripping-around protrusions (48) at least one opposite second gripping-around protrusion (50) is arranged.

9. The operating unit according to any one of claims 1 to 8, **characterized in that** a positioning element assembly (42) for positioning the holding element (28) and the housing (12) relative to each other in the longitudinal extension of the bar-shaped part (38, 38', 38") when the holding part assumes the installation position, wherein the positioning element assembly (42) comprises at the housing (12) - or alternatively at the holding part (28) - two neighboring positioning abutment elements (46) between which, in the installation position of the holding part (28), an axial positioning protrusion (44) arranged at the holding part (28) - or alternatively at the housing (12) - is adapted to be immersed.

10. The operating unit according to any one of claims 1 to 9, **characterized in that** the bearing axle (40) is constituted by two bars aligned with each other, wherein gripping-around protrusions (48, 50) of a bearing shell assembly (32) are associated with each bar-shaped part (38, 38', 38"), and/or that the installation position of the holding part (28) is defined by two pairs of cooperating abutment elements (34, 60) at the holding part (28) and the housing (12).

11. The operating unit according to claim 9 and 10, **characterized in that** the positioning element assembly (42) is arranged between the two bars or between the two pairs of abutment elements (34, 60).

12. The operating unit according to any one of claims 1 to 11, wherein cooperating guiding areas at the holding part (28) and at the housing (12) for supporting the orientation of the holding part (28) when the gripping-around protrusions (48, 50) of the at least one bearing shell assembly (32) are mounted on the at least one bar-shaped part (38, 38', 38") for the holding part (28) to assume its preassembly position.

## Revendications

1. Unité de commande pour un véhicule, en particulier interface homme-machine pour, par exemple, un composant de véhicule, tel qu'un système de chauffage, de ventilation et/ou de climatisation, un système d'info-divertissement, un système de navigation ou similaires, dotée
- d'un boîtier (12) doté d'un panneau avant (14) comportant un évidement (16),
- d'un écran (24) disposé dans le boîtier (12), doté d'une surface d'affichage (26), laquelle est disposée dans l'évidement (16) ou derrière celui-ci, et
- d'un dispositif de fixation (36) destiné à fixer l'écran (24) dans le boîtier (12),
- dans laquelle le dispositif de fixation (36) comporte une pièce de maintien (28), l'écran (24) étant maintenue par celle-ci,
- la pièce de maintien (28) étant disposée dans le boîtier (12) de manière pivotante entre une position de préassemblage et une position de montage où l'écran se trouve dans l'évidement (16) du panneau avant (14) ou derrière celui-ci,
- le boîtier (12) - ou alternativement la pièce de maintien (28) - comportant un axe de palier (40), lequel est formé d'au moins une pièce en forme de tige (38, 38', 38") disposée dans le boîtier (12), ou alternativement dans la pièce de maintien (28),
- la pièce de maintien (28) - ou alternativement le boîtier (12) - comportant pour le placement sur la pièce en forme de tige (38, 38', 38") au moins un arrangement de coussinet de palier (32) doté d'au moins deux saillies périphériques (48, 50) formant, afin de reposer sur l'au moins une pièce en forme de tige (38, 38', 38"), une surface cylindrique de coussinet de palier (52), lesquelles s'étendent sur plus de 180° et sur moins de 270° et entre lesquelles se forme une ouverture de placement (53) afin de placer l'arrangement de coussinet de palier (32) sur la pièce en forme de tige (38, 38', 38"),
- la position de montage de la pièce de maintien (28) étant définie par des éléments d'appui (34, 60) du boîtier (12) et de la pièce de maintien (28) reposant l'un sur l'autre et
- le dispositif de fixation (36) comportant au moins un élément de fixation (58) destiné à fixer la pièce de maintien (28) dans la position de montage de celle-ci sur et/ou dans le boîtier (12),
**caractérisée**
- **en ce que** la pièce en forme de tige (38, 38', 38") comporte, le long de son étendue longitudinale dans au moins une section de placement (57), une surface périphérique avec un contour externe, laquelle diffère de la forme complémentaire de la surface de coussinet de palier (52) des saillies périphériques (48, 50) de l'au moins un arrangement de coussinet de palier (32), et
- **en ce que** la pièce en forme de tige (38, 38', 38") est orienté dans le boîtier (12) - ou alternativement l'au moins un arrangement de coussinet de palier (32) est orienté sur la pièce de maintien (28) - de telle sorte que l'au moins un arrangement de coussinet de palier (32) peut, dans la position de préassemblage de la pièce de maintien (28), être placé sur la section de placement (57) de la pièce en forme de tige (38, 38', 38") et peut pivoter depuis la position de préassemblage dans la position de montage, où l'au moins un arrangement de coussinet de palier (32) entoure de manière imperdable la pièce en forme de tige (38, 38', 38") à l'intérieur de sa section de placement (57).

2. Unité de commande selon la revendication 1, **caractérisée en ce que** l'au moins une pièce en forme de tige (38, 38', 38") comporte à l'intérieur de sa section de placement (57) un contour externe différant de la forme circonférentielle cylindrique par au moins une section d'aplatissement (54, 54', 54", 56, 56', 56").

3. Unité de commande selon la revendication 2, **caractérisée en ce que** l'au moins une pièce en forme de tige (38, 38', 38") comporte à l'intérieur de sa section de placement (57) un contour externe différant de la forme circonférentielle cylindrique par au moins deux sections d'aplatissement (54, 54', 54", 56, 56', 56").

4. Unité de commande selon la revendication 3, **caractérisée en ce que** deux sections d'aplatissement (54, 54', 54", 56, 56', 56") sont disposées de manière diamétralement opposée.

5. Unité de commande selon la revendication 1, **caractérisée en ce que** l'au moins une pièce en forme de tige (38, 38', 38") comporte dans sa section de placement (57) une surface périphérique polygonale, dans laquelle la plus longue des lignes d'écartements, passant à travers l'axe médian de la pièce en forme de tige (38, 38', 38"), entre deux angles extérieurs opposés de la surface périphérique polygonale est égale ou sensiblement égale au diamètre défini par la surface cylindrique de coussinet de palier (52) des saillies périphériques (48, 50) de l'au moins un arrangement de coussinet de palier (32) .

6. Unité de commande selon l'une des revendications 1 à 5, **caractérisée en ce que** les saillies périphériques (48, 50) de l'au moins un arrangement de coussinet de palier (32) forment, vu dans l'étendue de l'axe de palier (40), un arrangement sensiblement en forme de C.

7. Unité de commande selon l'une des revendications 1 à 6, **caractérisée en ce que** les saillies périphériques (48, 50) de l'au moins un arrangement de coussinet de palier (32) sont opposées l'une à l'autre et il existe au moins une paire de telles saillies périphériques (48, 50) .

8. Unité de commande selon l'une des revendications 1 à 6, **caractérisée en ce que** les saillies périphériques (48, 50) sont, vu dans l'étendue de l'axe de palier (40), disposées en décalage axial les unes par rapport aux autres, dans laquelle à l'intérieur de la zone d'écart entre des premières saillies périphériques adjacentes (48) est disposée au moins une deuxième saillie périphériques (50) opposée à celles-ci.

9. Unité de commande selon l'une des revendications 1 à 8, **caractérisée par** un arrangement d'élément de positionnement (42) destiné à positionner l'élément de maintien (28) et le boîtier (12) relativement l'un à l'autre dans le sens de la longueur de la pièce en forme de tige (38, 38', 38") lorsque la pièce de maintien (28) adopte la position de montage, dans laquelle l'arrangement d'élément de positionnement (42) sur le boîtier (12), ou alternativement sur la pièce de maintien (28), comporte deux éléments d'appui de positionnement (46) adjacents, entre lesquels, dans la position de montage de la pièce de maintien (28), une saillie de positionnement axial (44) disposée sur la pièce de maintien (28), ou alternativement sur le boîtier (12), peut plonger.

10. Unité de commande selon l'une des revendications 1 à 9, **caractérisée en ce que** l'axe de palier (40) est formé par deux tiges alignées l'une par rapport à l'autre, dans laquelle à chaque pièce en forme de tige (38, 38', 38") sont associées des saillies périphériques (48, 50) d'un arrangement de coussinet de palier (32), et/ou **en ce que** la position de montage de la pièce de maintien (28) est définie par deux paires d'éléments d'appui (34, 60) sur la pièce de maintien (28) et le boîtier (12) coopérant l'une avec l'autre.

11. Unité de commande selon la revendication 9 et 10, **caractérisée en ce que** l'arrangement d'élément de positionnement (42) est disposé entre les deux tiges ou entre les deux paires d'éléments d'appui (34, 60).

12. Unité de commande selon l'une des revendications 1 à 11, **caractérisée par** des surfaces de guidage sur la pièce de maintien (28) et le boîtier (12) coopérant l'une avec l'autre, destinées à assister l'orientation de la pièce de maintien (28) lors de l'emmanchement des saillies périphériques (48, 50) de l'au moins un arrangement de coussinet de palier (32) sur l'au moins une pièce en forme de tige (38, 38', 38") quand la pièce de maintien (28) est en position de préassemblage.
